# EUROPEAN PATENT APPLICATION

(11) **EP 2 079 273 A1**
(43) Date of publication of application: **15.07.2009**
(21) Application number: 08250134.7
(22) Date of filing: 11.01.2008
(51) Int. Cl.: H04W 88/08

(54) **Mobile communication access point**

(71) Applicant: British Telecommunications public limited company, 81 Newgate Street EC1A 7AJ (GB)
(72) Inventor: The designation of the inventor has not yet been filed
(74) Representative: Lidbetter, Timothy Guy Edwin

(57) **Abstract**

A portable device 1 carrying an antenna 5 suitable for communication with mobile cellular devices is connectable to the USB port 3 of a general-purpose computer 4 to allow the computer, when suitably configured, and connected to a cellular switching system 10, to operate as a cellular access point in locations where direct access to the cellular telecommunications network is not available.

## Description

This invention relates to mobile communications, and in particular to very-short-range wireless access points. Such access points, known as Access Point Base Stations or femtocells, give wireless coverage in a limited area. Unlike normal cellular base stations, (including so-called microcells and picocells) femtocells are not connected directly to the cellular switching system and the neighbouring cells do not have any awareness of their presence.

A typical example is a UMTS ("3G") cellular access point base station, connected to an Ethernet or broadband connection to the Internet or an intranet. The internet connection provides access to a dedicated mobile switching centre which reports the handover to the user's home location register in the conventional manner. Application of VoIP (Voice over Internet Protocol allows such a unit to be deployed as readily as a wi-fi (IEEE 802.11) access point, and provide the capabilities of a normal cellular base station. They are of particular use in locations such as parts of buildings where coverage from public cellular base stations is poor.

They do not form part of the planned cellular channel plan used by the overlay network but operate in another part of the spectrum compatible with standard cellular handsets. As they are not part of the planned overlay network they do not operate a neighbour list for handover control - neither do they appear on the neighbour lists of any of the nearby public base stations in the area. These neighbour lists are provided to assist the mobile unit to identify a base station to which to hand over when signal strength is deteriorating, to avoid loss of signal, particularly when a mobile unit is moving rapidly. The absence of a neighbour list is of less importance in the circumstances in which a femtocell is likely to be used, as its small range means that connection to it during rapid movement is neither possible nor desirable.

A handset coming into range of a base station not on the neighbour list of a currently serving base station will nevertheless hand over to it, so handover between a femtocell and the overlay network can still take place. This applies whether the femtocell coverage overlaps that of the nearest base station or not. To the cellular network as a whole, which has no knowledge of the geographical location of the femtocell, the handset will appear to jump from one part of the network to another, and back again.

Femtocells can deliver many of the benefits of fixed-mobile convergence without the need for a dual-mode (e.g. GSM and WiFi) handset.

As femtocell technology becomes available for use in fixed locations such as the home, and small and medium size business locations, it will become part of the working practice of many people to use the cellular network, through a local femtocell, for all their voice and data connectivity. They will become reliant on cellular access points being available. However, when working away from their usual base in locations having poor cellular coverage such as within large buildings, users who have become reliant on such cellular coverage will be at a disadvantage. Even if the overlying cellular network can be reached, the bandwidth available may be more limited than would be the case for a dedicated femtocell.

It would of course be possible for a user to take the standard femtocell device with him, but this would deprive anyone remaining at its usual location of its use. Moreover, whilst they are smaller than, for example, a laptop computer, a typical femtocell device is bulky enough to be inconvenient for a user to have to transport in addition to any other items he may need to travel with (such as a laptop computer).

The present invention provides a solution to this problem.

According to the present invention, there is provided an application to configure a general purpose computer to provide access between a wireless interface associated with the computer and, through a data network, a cellular switching system, such that the general purpose computer is operable as a cellular wireless system access point providing access between the cellular switching system and one or more mobile cellular devices in wireless contact with the wireless interface unit. The invention may be used, for example, to allow the host of a meeting, having broadband access, to create a temporary femtocell to allow his visitors access to the cellular system.

The general-purpose computer may be any device capable of connecting to a data network, such as a laptop computer, pda (personal digital assistant) or broadband-enabled mobile phone. The connection to the data network may itself be made by wifi or by a fixed data link (e.g. Ethernet)

By exploiting the capabilities of the general purpose computer, the additional hardware needed for the femtocell capabilities can be reduced to a minimum, stored in a very much smaller user device.

Application software to configure the general purpose computer may be carried on any convenient carrier such as a CD-ROM. If the general purpose computer itself has a built-in wireless capability, including an antenna (for example for wifi capabilities) it may be possible for the application to configure the computer to use that existing antenna. Otherwise, and in the preferred embodiment, the necessary hardware to operate as a wireless access point compatible with the devices to be connected may conveniently be in the form of an auxiliary device carrying an antenna and a coupling for connection to a the computer. This coupling may be in the form of a USB (universal serial bus) port on the general purpose computer, with identification coding to alert the general purpose computer to the presence of the hardware on the USB port and initiate the appropriate application software.

Some functions of the cellular base station (femtocell) may be carried on the auxiliary device, but to minimise the size and complexity of the device it is preferred that as much as possible is implemented on the general purpose computer itself.

The general purpose computer, once loaded with the application software, and being connected to a broadband service, can concurrently become a femtocell access point for other devices as well as maintaining its prime service as a user's work and communication device. The application runs as a background task on the computer, allowing its primary functions to be maintained in parallel.

If the general-purpose computer is to be connected to the data network by a wireless connection (e.g. the IEEE 802.11 standard known as "wifi") the auxiliary device may conveniently embody the wireless access technology for both the uplink to the data network (wifi) and the downlink (GSM/UMTS) for use as a femtocell access point for other mobile devices. This has the advantage of only requiring one USB port for both connections.

Several embodiments of the invention will be described with reference to the drawings, in which:
Figure 1 is a schematic depiction of a first embodiment of the invention:
Figure 2 is a schematic depiction of the functional elements which co-operate to operate the embodiment of Figure 1.
Figure 3 is a schematic depiction of a second embodiment of the invention:

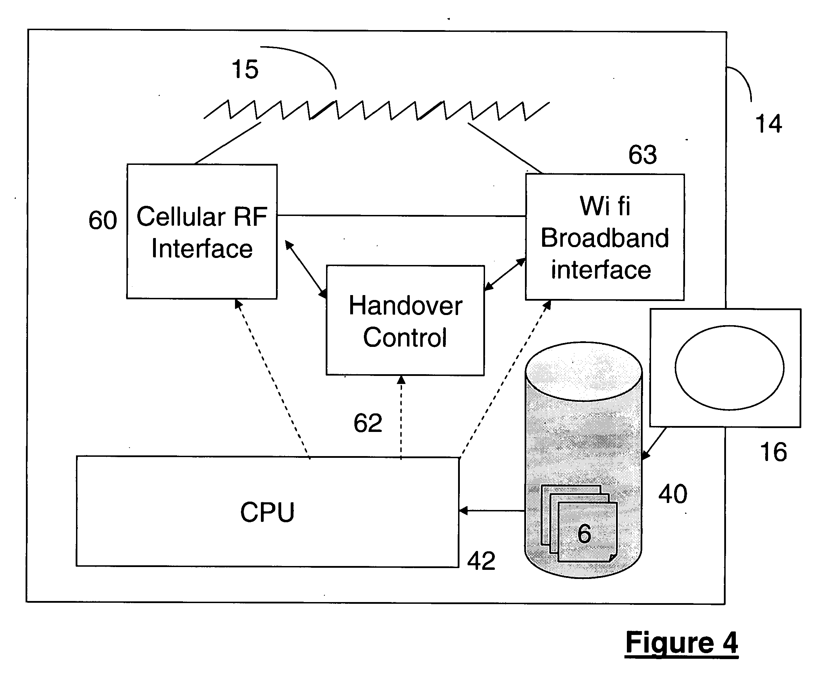

Figure 4 is a schematic depiction of the functional elements which co-operate to operate the embodiment of Figure 3.
Figure 5 is a schematic depiction of a third embodiment of the invention:
Figure 6 is a schematic depiction of the functional elements which co-operate to operate the embodiment of Figure 5.

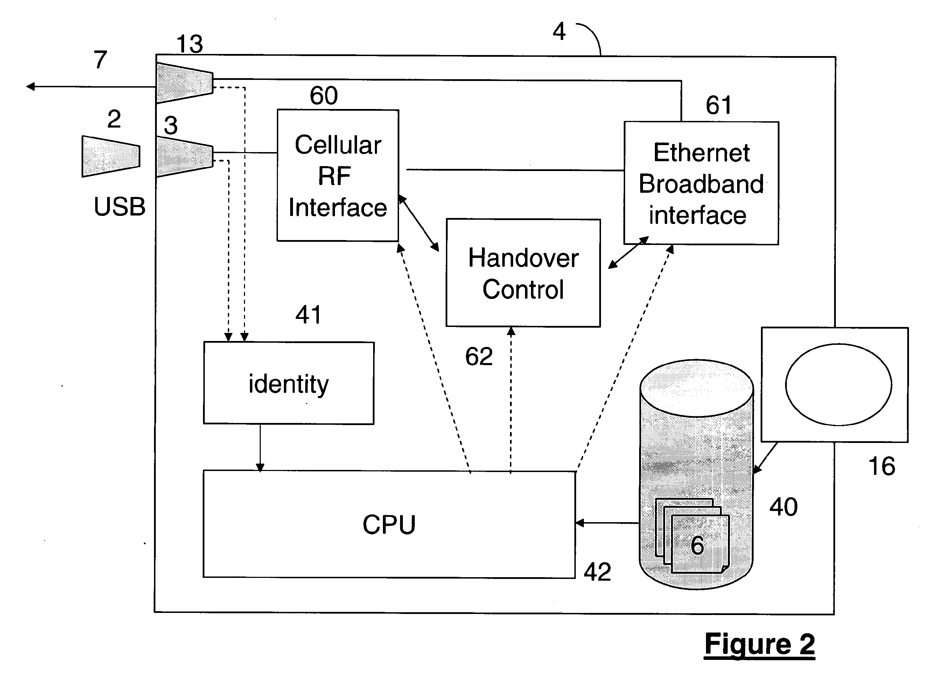

In the first embodiment the hardware is embodied as a device 1 having a connection plug 2 suitable for connection to a USB port 3 of a general purpose computer 4. The device 1 includes an antenna 5 suitable for GSM or UMTS radio capabilities, and communicates with a femtocell access point application 6 running on the computer 4. The device 1 also includes an identification chip 12, which responds to an interrogation process performed by the computer's standard USB application 41 (Figure 2) whenever it detects a device to have been connected to one of the USB ports 3, 13. By running most of the application software on the host computer 4, the size of this device may be quite small, the principal constraint being the size of antenna 5 required. It is envisaged that the device need be no larger than a few centimetres in length (including the connection plug 2), comparable to a typical USB memory stick, and therefore readily portable.

The application 6 is loaded on the computer from a CD-ROM read from a CD-ROM drive 16. Such installation is only required once: the application 6 may be stored in hard drive memory for later retrieval whenever the computer recognises the device 1. The computer 4 also has a broadband connection (shown here as an Ethernet connection 7), allowing it to act as an interface between users 8, 9 in radio range of the antenna 5 and the broadband connection 7, so that users 8, 9 can be connected to broadband services through the GSM/UMTS connection 7. In particular, the users can be connected over the broadband link 7 to the fixed infrastructure 10 of a cellular telephone network, allowing the computer 4 and antenna 5 to operate as a femtocell.

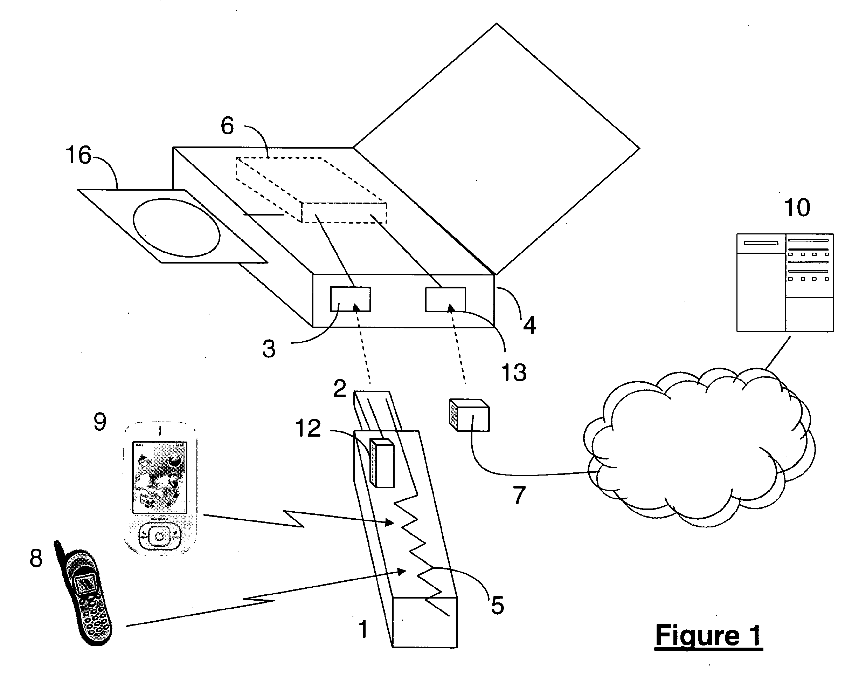

Figure 2 illustrates the functional elements operated by the application 6 on the computer 4. The application 6 is loaded from a CD ROM drive 16 to the computer's memory 40. When the USB connection 2 of the device 1 (Figure 1) is connected to the USB port 3, the computer's USB application 41 identifies the presence of the device and reads the identity chip 12. This allows the CPU 42 to identify the data to be retrieved from the memory 40 to configure the processor 42 to operate as a femtocell. This configuration requires a number of functions. The computer provides an RF interface function 60, converting the RF input from the antenna 5 to baseband digital data, and a broadband interface 61 for connection to the ethernet or wifi connection 7 giving access to the cellular network 10.

A handover control function 62 controls the initiation and termination of connection of handsets 8, 9 to the femtocell, and communication of presence data to the cellular network 10 to allow calls to be routed to the handsets 8, 9.

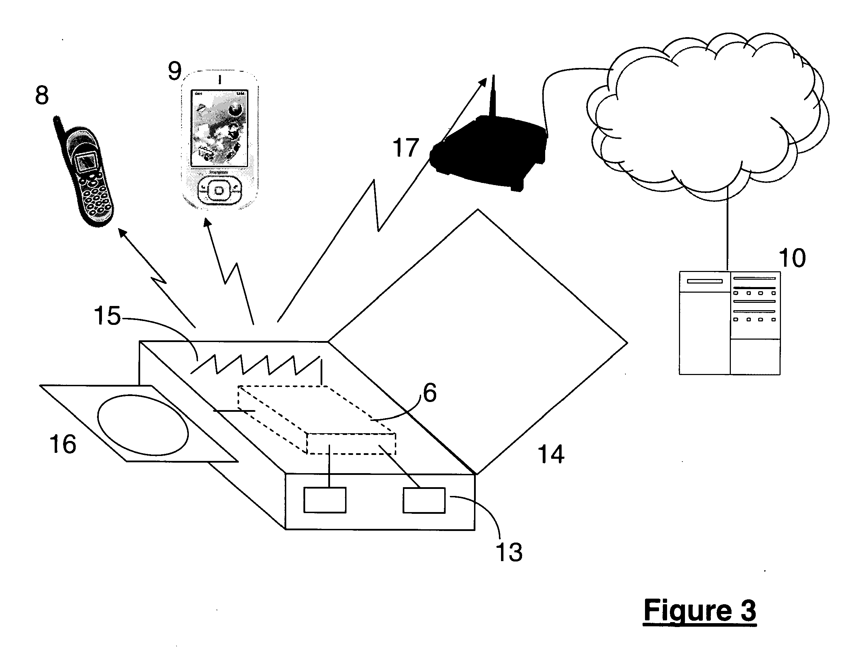

In the embodiment of Figure 3, there is no separate device 1. The general-purpose computer 14 of this embodiment is fitted with an internal antenna 15. As well as the femtocell function, this antenna 15 may be used for connection of the computer 14 to the Internet by way of a wifi connection 17 through a wifi interface 63. Alternatively, the computer may be connected to the Internet through an Ethernet interface 61, USB port 13 and Ethernet connection 7 as shown in the embodiment of Figures 1 and 2. The internal antenna 15 is configured for femtocell operation by the application 6. The functions are otherwise similar to those of the embodiment of Figures 1 and 2.

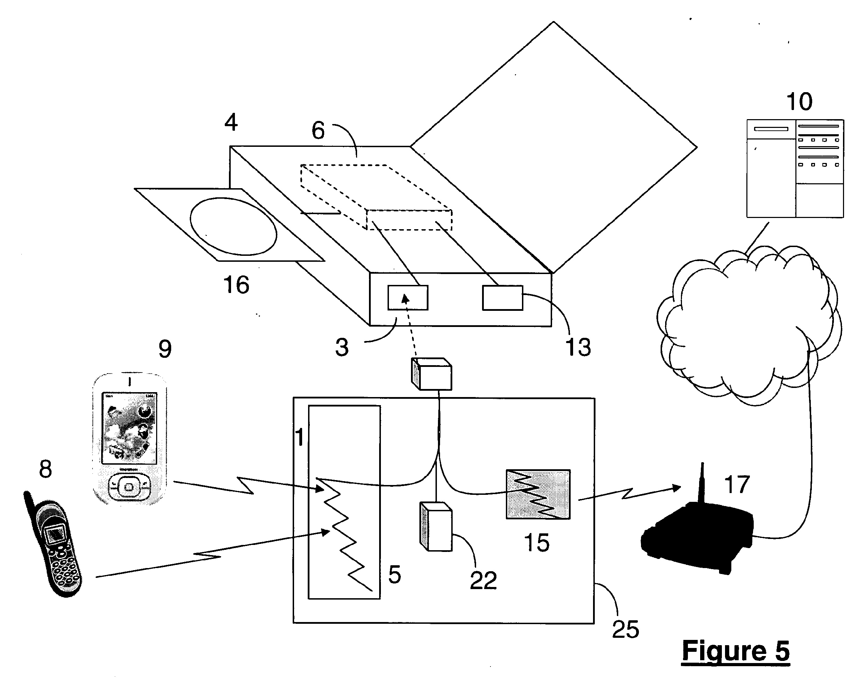

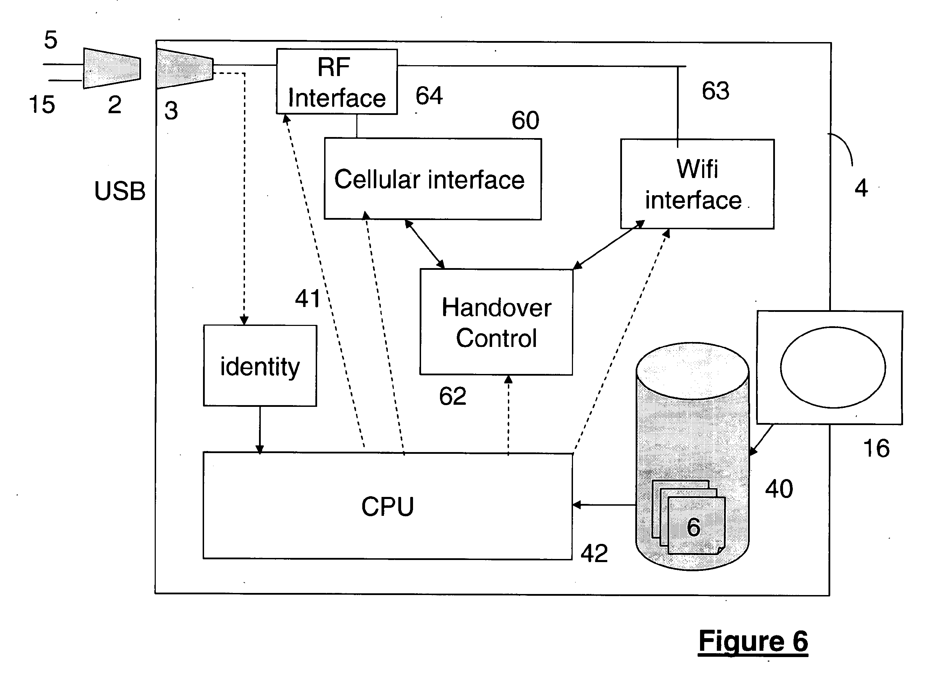

In the embodiment of Figures 5 and 6, an integrated interface unit 25 provides both a wifi access point 15 and a femtocell antenna 5, connected to the computer 4 through a common USB port 3. (As with Figure 3, the two functions may share an antenna rather than than using separate ones as shown in Figure 5) In this embodiment the application 6 provides for an additional RF interface 64, configured to extract both cellular (GSM/UMTS) and wifi data streams and direct them to the relevant functions 60, 63 and handle them according to their respective protocols. This arrangement has the advantage of using only one USB port 3. The identity chip 22 will differ from the chip 12 of Figure 1 as the device 25 carries the functions of both the femtocell and wifi connection.

In the embodiments of Figures 1/2 and 5/6, some of the functions, for example the conversion of signals from RF to baseband, may be performed by the separate device 1, 25 rather than in the general purpose computer 4. The functions to be performed by the computer are determined by the programme 6, provided on a carrier such as a CD-ROM 16 that is supplied with the interface unit 1, 25 and loaded into the memory 40 through a CD-ROM drive 16 or similar function.

## Claims

1. An application (6) to configure a general purpose computer (4) to provide access between a wireless interface (1, 15) associated with the computer and, through a data network (7), a cellular switching system (10), such that the general purpose computer is operable as a cellular wireless system access point providing access between the cellular switching system (10) and one or more mobile cellular devices (8, 9) in wireless contact with the wireless interface unit (1, 15).

2. An application according to claim 1, in association with a wireless interface unit (1) comprising an antenna (5) and connection means (2) for coupling to the computer.

3. The combination of an application and wireless interface unit of claim 2, wherein the connection means (2) is configured to connect to a general purpose port (3) on the computer and comprises identification means (12) alert the the operating system (42) of the general purpose computer to the presence of the wireless interface unit (1) when connected to the general-purpose port.

4. The combination of claim 2 or claim 3, wherein the wireless interface unit (25) incorporates means for providing wireless contact to both the data network (7) and the mobile cellular devices (8,9)

5. An application according to claim 1, for configuring a general-purpose computer (14) incorporating an antenna (15) such that the antenna is operable as a cellular wireless system access point.

6. An application according to claim 5, for configuring the general purpose computer such that the antenna (15) is also operable to provide a wireless connection to the data network (7)
